# EUROPEAN PATENT APPLICATION

(11) **EP 4 220 769 A1**
(43) Date of publication of application: **02.08.2023**
(21) Application number: 21872579.4
(22) Date of filing: 24.09.2021
(51) Int. Cl.: H01M 4/38, H01M 4/134, H01M 4/62

(54) **LITHIUM-ION SECONDARY BATTERY NEGATIVE ELECTRODE MIXTURE AND LITHIUM-ION SECONDARY BATTERY**

(30) Priority: 25.09.2020 JP 2020160616
(71) Applicant: Tohoku University, Sendai-shi, Miyagi 980-8577 (JP)
(72) Inventor: NAKAYAMA, Koji, Sendai-shi, Miyagi 980-8577 (JP); OKADA ,Junpei, Sendai-shi, Miyagi 980-8577 (JP)
(74) Representative: Eisenführ Speiser
(86) International application number: PCT/JP2021/035172
(87) International publication number: WO 2022/065450

(57) **Abstract**

A lithium-ion secondary battery negative electrode mixture includes a conductive additive and porous amorphous silicon particles including an amorphous silicon phase. The porous amorphous silicon particles have a lamellar structure including lamellar protrusions having an average thickness in a range of 1 nm or more and 200 nm or less, a columnar structure including columnar protrusions having an average diameter in a range of 1 nm or more and 100 nm or less, or a co-continuous structure including the lamellar protrusions and the columnar protrusions.

## Description

### Technical Field

The present invention relates to a lithium-ion secondary battery negative electrode mixture and a lithium-ion secondary battery.

The present application claims priority based on Japanese Patent Application No. JP-A-2020-160616 filed on September 25, 2020, and contents thereof are incorporated by reference.

### Background Art

A lithium-ion secondary battery is used as a power source for a mobile device or an electric vehicle, and a production volume thereof is rapidly increasing in the market. As a commonly used lithium-ion secondary battery, a non-aqueous electrolyte lithium-ion secondary battery using a non-aqueous electrolyte as an electrolyte, and a solid electrolyte lithium-ion secondary battery (all-solid-state battery) using a solid electrolyte are known.

As a negative electrode active material of the lithium-ion secondary battery, use of silicon has been investigated. Silicon has an advantage that a maximum theoretical mass capacity density thereof is 4200 mAh/g, which is higher than that of graphite (mass capacity density: 372 mAh/g), which is widely used as the negative electrode active material of the lithium-ion secondary battery. However, due to alloying silicon and lithium during charging, silicon may expand to about four times in volume. Therefore, in a lithium-ion battery using silicon particles as the negative electrode active material, due to expansion of the silicon particles due to insertion of lithium ions during charging and shrinkage of the silicon particles due to separation of the lithium ions during discharging, the silicon particles tend to collapse and to be micronized. When the silicon particles are micronized, the micronized silicon particles are physically detached from a negative electrode and/or a conductive path is lost, which may decrease an electric capacity of the negative electrode, leading to a decrease in charge-discharge cycle characteristics of the lithium-ion battery.

In order to improve the charge-discharge cycle characteristics, use of porous silicon has been investigated (NPL 1, PTL 1). NPL 1 describes an all-solid-state battery using a porous amorphous silicon film having a thickness of 4.73 um. The porous amorphous silicon film described in NPL 1 is formed by sputtering. In addition, PTL 1 describes porous silicon particles in which a plurality of silicon microparticles are bonded. An average particle diameter of each porous silicon particle described in PTL 1 is set to 0.1 um to 1000 µm, and an average particle diameter or an average pillar diameter of each silicon fine particle used as a raw material thereof is set to 10 nm to 500 nm. Further, each porous silicon particle described in PTL 1 contains single-crystal silicon produced by spinodal decomposition of a silicon alloy (precipitation of silicon in a molten metal from the silicon alloy) and dealloying.

### Citation list

### Patent Literature

PTL 1: Japanese Patent No. 5598861

### Non-Patent Literature

NPL 1: Junichi Sakabe, Narumi Ohta, Tsuyoshi Ohnishi, Kazutaka Mitsuishi & Kazunori Takada, Porous amorphous silicon film anodes for high-capacity and stable all-solid-state lithium batteries, COMMUNICATIONS CHEMISTRY volume 1, Article number: 24 (2018)

### Summary of Invention

### Technical Problem

Incidentally, a lithium-ion secondary battery is used for various applications such as a mobile device or an electric vehicle. Therefore, it is preferable that a mixture used as an electrode material of the lithium-ion secondary battery can be adapted to a size corresponding to the application of the lithium-ion secondary battery, and in particular, a battery having a large electric capacity by increasing a thickness of the mixture is desired. However, since the porous amorphous silicon film described in NPL 1 is formed by sputtering, it is difficult to form the porous amorphous silicon film with a large thickness. In addition, silicon itself has low conductivity. Therefore, when the thickness of the porous amorphous silicon film is increased, conductivity of the porous amorphous silicon film is decreased, the lithium ions are less likely to be inserted into the porous amorphous silicon film, and a capacity of the porous amorphous silicon film may be decreased.

The porous silicon particles described in PTL 1 are made of single-crystal silicon. Therefore, when the expansion of the porous silicon particles due to the insertion of the lithium ions during charging and the shrinkage of the porous silicon particles due to the separation of the lithium ions during discharging are repeated, breakage may occur in the crystal, and the conductive path in the crystal may be lost. When the conductive path in the crystal is lost, a charge-discharge capacity of the porous silicon particles is decreased.

The invention is made for solving the problems, and an object of the invention is to provide a lithium-ion secondary battery negative electrode mixture having a high electric capacity and excellent charge-discharge cycle characteristics and storage characteristics even when a thickness of a negative electrode mixture layer is increased, and a lithium-ion secondary battery using the negative electrode mixture.

### Solution to Problem

As a result of an intensive investigation, the present inventors have found that in order to achieve the above object, a negative electrode mixture layer having no restriction in thickness can be easily formed by using a negative electrode mixture containing a conductive additive and porous amorphous silicon particles having a specific lamellar structure and/or a columnar structure. In a lithium-ion secondary battery using the negative electrode mixture layer, it was confirmed that a mass electric capacity of the porous amorphous silicon particles is high and charge-discharge cycle characteristics and storage characteristics are excellent, whereby the invention was completed.

That is, a lithium-ion secondary battery negative electrode mixture according to the invention includes a conductive additive and a negative electrode active material. The negative electrode active material contains porous amorphous silicon particles including an amorphous silicon phase. The porous amorphous silicon particles have a lamellar structure including lamellar protrusions having an average thickness in a range of 1 nm or more and 200 nm or less, a columnar structure including columnar protrusions having an average diameter in a range of 1 nm or more and 100 nm or less, or a co-continuous structure including the lamellar protrusions and the columnar protrusions.

In the porous amorphous silicon particles contained in the lithium-ion secondary battery negative electrode mixture according to the invention, volume expansion during charging is absorbed by pores. Accordingly, a volume change in appearance can be reduced. In addition, amorphous silicon has higher strength and higher elasticity than that of crystalline silicon, and thus is less likely to collapse due to expansion or shrinkage during charging or discharging. Further, amorphous silicon does not essentially have a dislocation defect observed in a crystal thereof. Breakage of a general material is a starting point of a dislocation defect in which stress concentration occurs, but since the porous amorphous silicon particles do not have a dislocation defect and breakage due to stress concentration does not occur, a conductive path in particles is less likely to disappear. Therefore, the negative electrode mixture according to the invention has excellent charge-discharge cycle characteristics and storage characteristics. In addition, the negative electrode mixture according to the invention contains the conductive additive, and thus has a high conductivity. Therefore, since lithium is easily inserted into the porous amorphous silicon particles even when the thickness of the negative electrode mixture layer is increased, an electric capacity of the negative electrode mixture is increased.

In the lithium-ion secondary battery negative electrode mixture all-solid-state battery according to the invention, when the porous amorphous silicon particles include the lamellar protrusions, an interval between the lamellar protrusions adjacent to each other is preferably in a range of 1 nm or more and 100 nm or less. In addition, the average thickness of the lamellar protrusions is preferably in a range of 1 nm or more and 50 nm or less. On the other hand, when the porous amorphous silicon particles include the columnar protrusions, the average thickness of the columnar protrusions is preferably in the range of 1 nm or more and 50 nm or less. Further, an interval between the columnar protrusions adjacent to each other is in a range of 1 nm or more and 100 nm or less.

When the porous amorphous silicon particles have the above structure, the volume expansion during charging can be efficiently absorbed by pores, which are the intervals between the lamellar protrusions or between the columnar protrusions. Therefore, the porous amorphous silicon particles have a smaller volume change in appearance due to charge and discharge.

In the lithium-ion secondary battery negative electrode mixture according to the invention, the porous amorphous silicon particles preferably have an average porosity in a range of 10% or more and 99% or less.

The porous amorphous silicon particles having the average porosity within the above range can efficiently absorb the volume expansion during charging by the pores. Therefore, the porous amorphous silicon particles have a further smaller volume change in appearance due to charge and discharge.

In the lithium-ion secondary battery negative electrode mixture according to the invention, the conductive additive preferably contains a carbon material.

In this case, since the carbon material is excellent in conductivity, the conductivity of the negative electrode mixture is improved. Therefore, lithium ions are easily inserted into the porous amorphous silicon particles.

The lithium-ion secondary battery negative electrode mixture according to the invention preferably further contains a solid electrolyte.

In this case, lithium-ion conductivity of the negative electrode mixture is improved. In addition, as the negative electrode mixture layer, affinity with a solid electrolyte layer is increased when incorporated into the all-solid-state battery. Therefore, the negative electrode mixture containing the solid electrolyte can be advantageously used for the all-solid-state battery.

A lithium-ion secondary battery according to the invention includes a negative electrode containing the above lithium-ion secondary battery negative electrode mixture.

Since the lithium-ion secondary battery according to the invention contains the above lithium-ion secondary battery negative electrode mixture, even when the thickness of the negative electrode mixture layer is increased, the electric capacity is high, and the charge-discharge cycle characteristics and the storage characteristics are excellent.

### Advantageous Effect

According to the invention, a lithium-ion secondary battery negative electrode mixture having a high electric capacity and excellent charge-discharge cycle characteristics and storage characteristics even when a thickness of a negative electrode mixture layer is increased and a lithium-ion secondary battery using the negative electrode mixture can be provided.

### Brief Description of Drawings

[FIG. 1] FIG. 1 is a cross-sectional view illustrating an example of an all-solid-state battery according to an embodiment of the invention.
[FIG. 2] FIG. 2 is a cross-sectional view illustrating an example of a non-aqueous electrolyte lithium-ion secondary battery according to an embodiment of the invention.
[FIG. 3A] FIG. 3A is a scanning electron microscope (SEM) photograph of porous amorphous silicon particles obtained in Example 1.
[FIG. 3B] FIG. 3B is an enlarged SEM photograph of FIG. 3A.
[FIG. 3C] FIG. 3C is an enlarged SEM photograph of FIG. 3B.
[FIG. 3D] FIG. 3D is an enlarged SEM photograph of FIG. 3C.
[FIG. 4A] FIG. 4A is an XRD spectrum of the porous amorphous silicon particles obtained in Example 1.
[FIG. 4B] FIG. 4B is an XRD spectrum of crystalline silicon prepared as a reference sample in an Example.
[FIG. 5] FIG. 5 is an energy spectrum measured by EDX of the porous amorphous silicon particles obtained in Example 1.
[FIG. 6A] FIG. 6A is a graph illustrating charge-discharge characteristics of an all-solid-state battery using the porous amorphous silicon particles obtained in Example 1 as a negative electrode active material.
[FIG. 6B] FIG. 6B is a graph illustrating cycle characteristics of the all-solid-state battery using the porous amorphous silicon particles obtained in Example 1 as a negative electrode active material.
[FIG. 7A] FIG. 7A is an SEM photograph of porous amorphous silicon particles (ribbon shape) obtained in Example 2.
[FIG. 7B] FIG. 7B is an enlarged SEM photograph of FIG. 7A.
[FIG. 7C] FIG. 7C is an enlarged SEM photograph of FIG. 7B.
[FIG. 8] FIG. 8 is an XRD spectrum of the porous amorphous silicon particles obtained in Example 2.
[FIG. 9A] FIG. 9A is an SEM photograph of a negative electrode mixture layer obtained in Example 3.
[FIG. 9B] FIG. 9B is an enlarged SEM photograph of FIG. 9A.
[FIG. 10] FIG. 10 is a graph illustrating an evaluation result of a charge-discharge cycle of a non-aqueous electrolyte lithium-ion secondary battery using porous amorphous silicon particles obtained in Example 3 as a negative electrode active material.
[FIG. 11] FIG. 11 is a graph illustrating an evaluation result of a charge-discharge cycle of a non-aqueous electrolyte lithium-ion secondary battery using porous amorphous silicon particles obtained in Example 4 as a negative electrode active material.
[FIG. 12] FIG. 12 is a graph illustrating an evaluation result of a charge-discharge cycle of a non-aqueous electrolyte lithium-ion secondary battery using porous amorphous silicon particles obtained in Example 5 as a negative electrode active material.
[FIG. 13] FIG. 13 is a graph illustrating an evaluation result of a charge-discharge cycle of a non-aqueous electrolyte lithium-ion secondary battery using porous amorphous silicon particles obtained in Example 6 as a negative electrode active material.

### Description of Embodiments

An embodiment of a lithium-ion secondary battery negative electrode mixture and an all-solid-state battery according to the invention will be described in detail with reference to the drawings as appropriate. In the drawings used in the following description, in order to make features of the invention easier to understand, the features may be enlarged for convenience, and dimensional ratios of constituent elements may not be the same as the actual ones. Materials, dimensions, etc. exemplified in the following description are examples, and the invention is not limited thereto and can be appropriately modified and implemented without changing the gist of the invention.

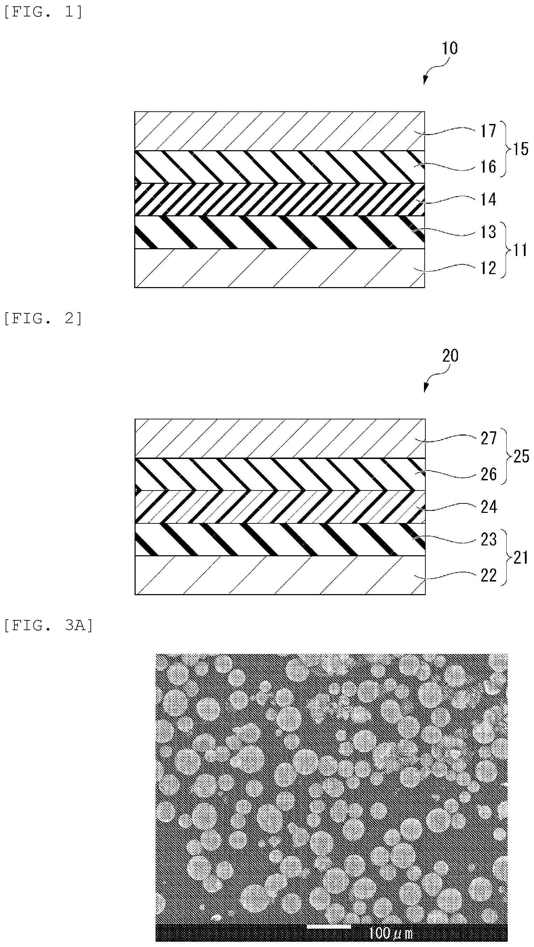

FIG. 1 is a cross-sectional view illustrating an example of an all-solid-state battery according to an embodiment of the invention.

As illustrated in FIG. 1, an all-solid-state battery 10 is a laminate in which a negative electrode 11, a solid electrolyte layer 14, and a positive electrode 15 are laminated in this order. The negative electrode 11 includes a negative electrode current collector 12 and a negative electrode mixture layer 13. The positive electrode 15 includes a positive electrode mixture layer 16 and a positive electrode current collector 17. The negative electrode mixture layer 13 and the positive electrode mixture layer 16 are located on a side closer to the solid electrolyte layer 14. That is, the solid electrolyte layer 14 is located between the negative electrode mixture layer 13 and the positive electrode mixture layer 16.

A shape and a material of the negative electrode current collector 12 are not particularly limited. The shape of the negative electrode current collector 12 may be, for example, a foil shape, a plate shape, a mesh shape, or a lattice shape. In addition, the material of the negative electrode current collector 12 may be, for example, stainless steel, copper, nickel, titanium, platinum, or the like.

The negative electrode mixture layer 13 is formed of a negative electrode mixture containing a conductive additive and a negative electrode active material. The negative electrode mixture may further contain a solid electrolyte.

The conductive additive has a function of improving conductivity of the negative electrode mixture layer 13. As the conductive additive, for example, a carbon material or a metal material can be used. Examples of the carbon material include carbon black, acetylene black, Ketjen black, furnace black, activated carbon, graphite, carbon fiber, carbon nanotube, graphene, and fullerene. Examples of the metal material include gold, silver, copper, and platinum. The conductive additives may be used alone or in combination of two or more types thereof. The conductive additive preferably contains a carbon material.

The negative electrode active material contains porous amorphous silicon particles. The porous amorphous silicon particles include an amorphous silicon phase. The porous amorphous silicon particles contained in the negative electrode active material may be a single substance containing only an amorphous silicon phase, or a composite containing an amorphous silicon phase and a crystalline silicon phase. In addition, the negative electrode active material may contain crystalline silicon particles. When the negative electrode active material contains a crystalline silicon component (crystalline silicon phase or crystalline silicon particles), a content of the crystalline silicon component of the negative electrode active material may be, for example, an amount such that a ratio A/B of a maximum peak value A of an XRD spectrum of the negative electrode active material due to crystalline silicon to a maximum peak value B of an XRD spectrum of a reference sample of crystalline silicon is 0.5 or less. In addition, the content of the crystalline silicon component of the negative electrode active material may be, for example, an amount such that a ratio C/D of a half-value width C of the maximum peak value of the XRD spectrum of the negative electrode active material due to crystalline silicon to a half-value width D of the maximum peak value of the XRD spectrum of the reference sample of the crystalline silicon is 2.0 or more. As the reference sample of crystalline silicon, silicon particles having an average particle diameter of 5 um and a purity of 3N, manufactured by Kojundo Chemical Laboratory Co., Ltd., may be used.

Further, when the negative electrode active material contains crystalline silicon particles, the crystalline silicon particles may adhere to surfaces of the porous amorphous silicon particles with an average particle diameter in a range of 0.5 um or more and 1.5 um or less. The crystalline silicon particles and the porous amorphous silicon particles can be identified by presence or absence of facet surfaces and presence or absence of Kikuchi lines in electron backscatter diffraction (EBSD). That is, the crystalline silicon particles have facet surfaces, and Kikuchi lines appear in EBSD. The porous amorphous silicon particles do not have facet surfaces, and Kikuchi lines do not appear in EBSD. Regarding a content of the crystalline silicon particles of the negative electrode active material, a volume ratio of crystalline silicon to the porous amorphous silicon particles may be 10% or less. A method for measuring the content of the crystalline silicon particles will be described later.

The porous amorphous silicon particles have a lamellar structure, a columnar structure, or a co-continuous structure.

Porous amorphous silicon particles having a lamellar structure include protrusions protruding in a lamellar shape on the particle surface (lamellar protrusions). The lamellar protrusions are usually arranged in a layered manner. In porous amorphous silicon particles having a lamellar structure, a gap between the lamellar protrusions forms a pore. An average thickness of the lamellar protrusions is in a range of 1 nm or more and 100 nm or less, preferably in a range of 1 nm or more and 50 nm or less. An interval between the lamellar protrusions adjacent to each other is preferably in the range of 1 nm or more and 100 nm or less. The average thickness and the interval of the lamellar protrusions can be measured by using, for example, a scanning electron microscope (SEM).

Porous amorphous silicon particles having a columnar structure include protrusions protruding in a columnar shape on the particle surface (columnar protrusions). The columnar protrusions usually have a continuous layout. In porous amorphous silicon particles having a columnar structure, a gap between the columnar protrusions forms a pore. An average diameter of the columnar protrusions is in the range of 1 nm or more and 100 nm or less, and preferably in the range of 1 nm or more and 50 nm or less. An average aspect ratio of the columnar protrusions (average length / average diameter of the columnar protrusions) is preferably in a range of 1 or more and 50 or less. An interval between the columnar protrusions adjacent to each other is preferably in the range of 1 nm or more and 100 nm or less. The average diameter, the average aspect ratio, and the interval of the columnar protrusions can be measured by using, for example, an SEM.

The co-continuous structure refers to a structure in which the lamellar structure and the columnar structure are mixed. Porous amorphous silicon particles having a co-continuous structure include the lamellar protrusions and the columnar protrusions.

The structure of the porous amorphous silicon particles can be confirmed, for example, by observing the porous amorphous silicon particles by using an SEM. In addition, the porous amorphous silicon particles preferably have a continuous three-dimensional network structure in amorphous silicon, and also has continuous voids. Further, the porous amorphous silicon particles preferably have a silicon content of 90 at.% (atomic percent) or more in atomic percent of elements other than oxygen.

An average porosity of the porous amorphous silicon particles is preferably in a range of 10% or more and 99% or less. When the porous amorphous silicon particles are produced by selectively eluting components other than silicon from a eutectic alloy containing silicon and the components other than silicon, the porosity herein is a content of the components selectively eluted from the eutectic alloy in the eutectic alloy in atomic percent, that is, a content of the components selectively eluted from the eutectic alloy with respect to all components in the eutectic alloy in atomic percent. For example, when all the components other than silicon are eluted from the eutectic alloy, the porosity (%) = the content (at.%) of the component eluted from the eutectic alloy with respect to all the components in the eutectic alloy in atomic percent = 100 (at.%) - content (at.%) of silicon in the eutectic alloy in atomic percent.

A shape of the porous amorphous silicon particles is not particularly limited. The shape of the porous amorphous silicon particles may be, for example, a ribbon shape, a spherical shape, an elliptical shape, a cylindrical shape, a prismatic shape, or an irregular shape. Regarding a size of the porous amorphous silicon particles, a length of a major axis is preferably in a range of 1 nm or more and 100 um or less, more preferably in a range of 0.1 um or more and 100 um or less, and particularly preferably in a range of 10 um or more and 100 um or less.

The porous amorphous silicon particles can be produced, for example, as follows.

First, a molten metal containing metal and silicon is cooled at a cooling rate of 10⁶ K/sec or more to form a eutectic alloy containing metal and silicon. Next, the metal (components other than silicon) is selectively eluted from the eutectic alloy by an acid or an alkali. Accordingly, the porous amorphous silicon particles can be obtained. An amount of residual metal may be 10 at. % or less. In addition, the amount of the residual metal may be 2 at.% or more. Here, the crystalline silicon particles contained in the negative electrode active material may be crystalline silicon adhering to a eutectic alloy, which is an intermediate product of the porous amorphous silicon particles. In this case, the content of the crystalline silicon particles of the negative electrode active material is an adhesion amount of crystalline silicon adhering to the eutectic alloy. The adhesion amount of crystalline silicon adhering to the eutectic alloy can be measured, for example, as follows. By using a scanning transmission electron microscope with an energy dispersive X-ray analysis device (STEM-EDX), a cross section of the eutectic alloy is observed, and an area of a eutectic alloy portion in which the metal, other than silicon, is detected and an area of a silicon portion in which only silicon is detected are measured. Next, a ratio of the area of the silicon portion to the area of the eutectic alloy portion (area of silicon portion / area of eutectic alloy portion × 100) is calculated. The measurement of the ratio of the areas is performed on 10 eutectic alloys, and an average value thereof is defined as the adhesion amount of crystal silicon adhering to the eutectic alloy (content of the crystalline silicon particles of the negative electrode active material).

In a method for producing the above porous amorphous silicon particles, the eutectic alloy may be produced by, for example, single-roller or twin-roller melt spinning method. In this case, the produced eutectic alloy may have a ribbon shape or a foil piece shape having an average thickness in a range of 0.1 um or more and 1 mm or less. In addition, the eutectic alloy may be produced by gas atomization or water atomization. In this case, the produced eutectic alloy may have a granular shape having an average particle diameter in a range of 10 nm or more and 100 um or less. In addition, a domain size of a silicon phase in a structure of the eutectic alloy is preferably in the range of 1 nm or more and 100 nm or less, and more preferably in the range of 1 nm or more and 50 nm or less. When gas atomization is used as the method for producing a eutectic alloy powder, a device for producing a metal powder described in Japanese Patent No. 6544836 can be used as an atomizing device.

In the method for producing the porous amorphous silicon, the eutectic alloy may be, for example, an Al-Si alloy. In this case, Si is preferably contained in a range of 1 at.% or more and 50 at.% or less in atomic percent. Accordingly, the porous amorphous silicon having an average porosity in a range of 50% or more and 99% or less can be produced. In addition, the eutectic alloy may be a Fe-Si alloy, a Ni-Si alloy, a Cr-Si alloy, an Ag-Si alloy, or a Cu-Si alloy. In this case, Si is preferably contained in a range of 50 at.% or more and 90 at.% or less in atomic percent. Accordingly, the porous amorphous silicon having an average porosity in a range of 10% or more and 50% or less can be produced.

The eutectic alloy may be a binary-component or multicomponent eutectic alloy represented by M₁-Si (M₁ is one or more elements selected from Al, Ag, As, Au, Be, Ca, Cr, Cu, Mg, Pd, Pt, Y, Co, Fe, Mn, Ti, and Zr), or a ternary-component or multicomponent eutectic alloy represented by M₂-Al-Si (M₂ is one or more elements selected from Ca, Cu, Ge, P, Mn, Na, Sb, Sn, Sc, Sr, and Ti). In addition, the eutectic alloy may be an amorphous alloy.

The solid electrolyte has a function of improving lithium-ion conductivity of the negative electrode mixture layer 13. The solid electrolyte also has a function of improving affinity between the negative electrode mixture layer 13 and the solid electrolyte layer 14 to improve ion conductivity of lithium ions between the negative electrode mixture layer 13 and the solid electrolyte layer 14. As a material of the solid electrolyte, the same material as a material of the solid electrolyte layer 14 can be used. The material of the solid electrolyte layer 14 will be described later.

Regarding a proportion of the conductive additive and the negative electrode active material contained in the negative electrode mixture layer 13, an amount of the conductive additive is preferably in a range of 2 parts by mass or more and 8 parts by mass or less, more preferably in a range of 3 parts by mass or more and 7 parts by mass or less, and particularly preferably in a range of 4 parts by mass or more and 6 parts by mass or less, with respect to 1 part by mass of the negative electrode active material. In addition, regarding a proportion of the solid electrolyte and the negative electrode active material contained in the negative electrode mixture layer 13, an amount of the solid electrolyte is preferably in a range of 0.1 parts by mass or more and 3 parts by mass or less, more preferably in a range of 0.2 parts by mass or more and 2.5 parts by mass or less, and particularly preferably in a range of 0.5 parts by mass or more and 2 parts by mass or less, with respect to 1 part by mass of the negative electrode active material.

The solid electrolyte layer 14 contains a solid electrolyte. The solid electrolyte is preferably lithium-ion conductive. As the solid electrolyte, for example, a sulfide-based solid electrolyte and an oxide-based solid electrolyte can be used. Examples of the sulfide-based solid electrolyte include Li₂S-P₂S₅ and LiI-Li₂S-P₂S₅. As the oxide-based solid electrolyte, a NASICON-type oxide, a garnet-type oxide, or the like can be used. Examples of the NASICON-type oxide include Li_{1.4}Al_{0.4}Ti_{1.6}(PO₄)₃. Examples of the garnet-type oxide include Li₇La₃Zr₂O₁₂.

The positive electrode mixture layer 16 contains a positive electrode active material. The positive electrode mixture layer 16 may contain a conductive additive. The positive electrode mixture layer 16 may further contain a solid electrolyte.

The positive electrode active material is preferably a lithium-containing compound in which lithium is released during charging and lithium is inserted during discharging. As the positive electrode active material, for example, a layered rock salt-type oxide, a spinel-type oxide, an olivine-type phosphate, a silicate and the like are used. Examples of the layered rock salt-type oxide include LiCoO₂, LiMnO₂, LiNiO₂, and Li(NiₓCo_{y}Mn_{z})O₂ (x + y + z = 1) . Examples of the spinel-type oxide include LiMn₂O₄ and Li (Ni_{0.5}Mn_{1.5})O₄. Examples of the olivine-type phosphate include LiFePO₄, LiMnPO₄, LiNiPO₄, and LiCuPO₄. Examples of the silicate include Li₂FeSiO₄ and Li₂MnSiO₄.

The conductive additive has a function of improving conductivity of the positive electrode mixture layer 16. As the conductive additive, for example, a carbon material or a metal material can be used. Examples of the carbon material and the metal material are the same as those of the conductive additive contained in the negative electrode mixture layer 13.

The solid electrolyte has a function of improving lithium-ion conductivity of the positive electrode mixture layer 16. The solid electrolyte also has a function of improving affinity between the positive electrode mixture layer 16 and the solid electrolyte layer 14 to improve ion conductivity of lithium ions between the positive electrode mixture layer 16 and the solid electrolyte layer 14. As a material of the solid electrolyte, the same material as the material of the solid electrolyte layer 14 can be used.

Regarding a proportion of the conductive additive and the positive electrode active material contained in the positive electrode mixture layer 16, an amount of the conductive additive is preferably in a range of 0.02 parts by mass or more and 1.00 parts by mass or less, more preferably in a range of 0.04 parts by mass or more and 0.50 parts by mass or less, and particularly preferably in a range of 0.08 parts by mass or more and 0.25 parts by mass or less, with respect to 1 part by mass of the positive electrode active material. In addition, regarding a proportion of the solid electrolyte and the positive electrode active material contained in the positive electrode mixture layer 16, an amount of the solid electrolyte is preferably in a range of 0.1 parts by mass or more and 3.0 parts by mass or less, more preferably in a range of 0.2 parts by mass or more and 1.5 parts by mass or less, and particularly preferably in a range of 0.4 parts by mass or more and 0.8 parts by mass or less, with respect to 1 part by mass of the positive electrode active material.

A shape and a material of the positive electrode current collector 17 are not particularly limited. The shape of the positive electrode current collector 17 may be, for example, a foil shape, a plate shape, a mesh shape, or a lattice shape. In addition, the material of the positive electrode current collector 17 may be, for example, stainless steel, copper, aluminum, nickel, titanium, platinum, or the like.

The all-solid-state battery 10 according to the present embodiment is housed and used in an exterior container. A shape of the exterior container is not particularly limited. Examples of the shape of the exterior container include a coin type, a button type, a sheet type, a cylinder type, and a square type.

Next, a method for producing the all-solid-state battery 10 according to the present embodiment will be described.

The all-solid-state battery 10 can be produced, for example, as follows.

First, a negative electrode and a positive electrode are produced. Next, a negative electrode mixture layer of the negative electrode and a positive electrode mixture layer of the positive electrode are laminated in a manner of facing each other with a solid electrolyte layer interposed therebetween.

The negative electrode is produced by, for example, dispersing a negative electrode mixture in a solvent to prepare a negative electrode mixture paste. Next, the negative electrode mixture paste is applied onto a negative electrode current collector to form a coating layer. A coating method is not particularly limited, and examples thereof include spin coating, dipping, die coating, spray coating, and gravure printing. Next, the coating layer is dried to form the negative electrode mixture layer.

The positive electrode can be produced in the same manner as the negative electrode, except that a positive electrode mixture is used instead of the negative electrode mixture.

The all-solid-state battery 10 can also be produced by laminating a negative electrode current collector, a negative electrode mixture pellet, a solid electrolyte pellet, a positive electrode mixture pellet, and a positive electrode current collector, and pressurizing the obtained laminate. The negative electrode mixture pellet, the solid electrolyte pellet, and the positive electrode mixture pellet can be produced by, for example, press forming.

FIG. 2 is a cross-sectional view illustrating an example of a non-aqueous electrolyte lithium-ion secondary battery according to an embodiment of the invention.

As illustrated in FIG. 2, a non-aqueous electrolyte lithium-ion secondary battery 20 includes a laminate in which a negative electrode 21, a separator 24, and a positive electrode 25 are laminated in this order, and a non-aqueous electrolyte (not illustrated). The negative electrode 21 includes a negative electrode current collector 22 and a negative electrode mixture layer 23. The positive electrode 25 includes a positive electrode mixture layer 26 and a positive electrode current collector 27. The negative electrode mixture layer 23 and the positive electrode mixture layer 26 are located on a side closer to the separator 24. That is, the separator 24 is located between the negative electrode mixture layer 23 and the positive electrode mixture layer 26.

A shape and a material of the negative electrode current collector 22 are not particularly limited. The negative electrode current collector 22 can be the same as the above negative electrode current collector 12 of the all-solid-state battery 10.

The negative electrode mixture layer 23 is formed of a negative electrode mixture containing a conductive additive and porous amorphous silicon particles. The negative electrode mixture may further contain a binder.

The conductive additive and the porous amorphous silicon particles can be the same as those usable in the above negative electrode mixture layer 13 of the all-solid-state battery 10.

The binder has a function of improving electrical conductivity and lithium-ion conductivity of the negative electrode mixture layer 13 by bringing the conductive additive and the porous amorphous silicon particles into close contact with each other and improving adhesion between the negative electrode mixture layer 23 and the negative electrode current collector 22. As the binder, for example, a polymer such as a polyimide, a polyamide, a polyamideimide, polyvinylidene fluoride, and polytetrafluoroethylene, or a rubber such as a styrene-butadiene rubber and a fluoro rubber can be used.

Regarding a proportion of the conductive additive and the negative electrode active material contained in the negative electrode mixture layer 23, an amount of the conductive additive is preferably in a range of 0.1 parts by mass or more and 1 part by mass or less, more preferably in a range of 0.2 parts by mass or more and 0.8 parts by mass or less, and particularly preferably in a range of 0.2 parts by mass or more and 0.6 parts by mass or less, with respect to 1 part by mass of the negative electrode active material. In addition, regarding a proportion of the binder and the negative electrode active material contained in the negative electrode mixture layer 23, an amount of the binder is preferably in a range of 0.05 parts by mass or more and 1 part by mass or less, more preferably in a range of 0.05 parts by mass or more and 0.5 parts by mass or less, and particularly preferably in a range of 0.05 parts by mass or more and 0.3 parts by mass or less, with respect to 1 part by mass of the negative electrode active material.

As the separator 24, a porous film can be used. As a material of the porous film, a polyolefin such as polyethylene, polypropylene, and ethylene-propylene copolymer, or a polyester such as polyethylene terephthalate can be used.

The positive electrode mixture layer 26 contains a positive electrode active material. The positive electrode mixture layer 26 may contain a conductive additive. The positive electrode mixture layer 26 may further contain a binder.

The positive electrode active material and the conductive additive can be the same as those usable in the above positive electrode mixture layer 16 of the all-solid-state battery 10.

The binder has a function of bringing the conductive additive and the positive electrode active material into close contact with each other, thereby improving electrical conductivity and lithium-ion conductivity of the positive electrode mixture layer 26 and improving adhesion between the positive electrode mixture layer 26 and the positive electrode current collector 27. The binder can be the same as that usable in the negative electrode mixture layer 23.

Regarding a proportion of the conductive additive and the positive electrode active material contained in the positive electrode mixture layer 26, an amount of the conductive additive is preferably in a range of 0.1 parts by mass or more and 1 part by mass or less, more preferably in a range of 0.2 parts by mass or more and 0.8 parts by mass or less, and particularly preferably in a range of 0.2 parts by mass or more and 0.6 parts by mass or less, with respect to 1 part by mass of the positive electrode active material. In addition, regarding a proportion of the binder and the positive electrode active material contained in the positive electrode mixture layer 26, an amount of the binder is preferably in a range of 0.05 parts by mass or more and 1 part by mass or less, more preferably in a range of 0.05 parts by mass or more and 0.5 parts by mass or less, and particularly preferably in a range of 0.05 parts by mass or more and 0.3 parts by mass or less, with respect to 1 part by mass of the positive electrode active material.

The positive electrode current collector 27 can be the same as that usable in the above positive electrode current collector 17 of the all-solid-state battery 10.

The non-aqueous electrolyte contains a non-aqueous solvent and an electrolyte salt.

Examples of the non-aqueous solvent include cyclic carbonates, chain carbonates, ethers, lactones, and nitriles. Examples of the cyclic carbonates include ethylene carbonate, propylene carbonate, 1,2-butylene carbonate, 2,3-butylene carbonate, 1,2-pentylene carbonate, and 2,3-pentylene carbonate. Examples of the chain carbonates include dimethyl carbonate, diethyl carbonate, ethyl methyl carbonate, methyl propyl carbonate, ethyl propyl carbonate, and dipropyl carbonate. Examples of the ethers include tetrahydrofuran, 2-methyltetrahydrofuran, 1,4-dioxane, 1,2-dimethoxyethane, and 1,2-dibutoxyethane. Examples of the lactones include γ-butyrolactone. Examples of the nitrites include acetonitrile. These non-aqueous solvents may be used alone or in combination of two or more types thereof. In addition, in the non-aqueous solvent, a part or all of hydrogen may be replaced with fluorine.

Examples of the electrolyte salt include lithium hexafluorophosphate (LiPF₆), lithium perchlorate (LiClO₄), lithium tetrafluoroborate (LiBF₄), lithium trifluoromethanesulfonate (LiCF₃SO₃), and bis(trifluoromethylsulfonylimide) lithium (LiN(CF₃SO₂)₂).

A concentration of the electrolyte salt of the non-aqueous electrolyte may be, for example, in a range of 0.5 mol/liter or more and 2.0 mol/liter or less.

The non-aqueous electrolyte lithium-ion secondary battery 20 according to the present embodiment is housed and used in an exterior container. A shape of the exterior container is not particularly limited. Examples of the shape of the exterior container include a coin type, a button type, a sheet type, a cylinder type, and a square type.

Next, a method for producing the non-aqueous electrolyte lithium-ion secondary battery 20 according to the present embodiment will be described. The non-aqueous electrolyte lithium-ion secondary battery 20 can be produced, for example, as follows. First, a negative electrode and a positive electrode are produced. Next, a negative electrode mixture layer of the negative electrode and a positive electrode mixture layer of the positive electrode are laminated in a manner of facing each other with a separator interposed therebetween to obtain a laminate. Next, a non-aqueous electrolyte is injected into the obtained laminate.

The negative electrode can be produced, for example, as follows. First, a negative electrode mixture is dispersed in a solvent to prepare a negative electrode mixture paste. Next, the negative electrode mixture paste is applied onto a negative electrode current collector to form a coating layer. A coating method is not particularly limited, and examples thereof include spin coating, dipping, die coating, spray coating, and gravure printing. Next, the coating layer is dried to form the negative electrode mixture layer.

The positive electrode can be produced in the same manner as the negative electrode, except that a positive electrode mixture is used instead of the negative electrode mixture.

The non-aqueous electrolyte lithium-ion secondary battery 20 can also be produced by laminating a negative electrode current collector, a negative electrode mixture pellet, a separator, a positive electrode mixture pellet, and a positive electrode current collector, and pressurizing the obtained laminate. The negative electrode mixture pellet and the positive electrode mixture pellet can be produced by, for example, press forming.

In the lithium-ion secondary battery (all-solid-state battery 10 and non-aqueous electrolyte lithium-ion secondary battery 20) according to the present embodiment configured as described above, the porous amorphous silicon particles contained in the negative electrode mixture layers 13 and 23 absorb volume expansion during charging by the pore. Accordingly, a volume change in appearance can be reduced. In addition, since amorphous silicon has higher strength and higher elasticity than that of crystalline silicon, amorphous silicon is less likely to collapse due to expansion or shrinkage during charging or discharging. Further, amorphous silicon does not essentially have a dislocation defect observed in a crystal. Therefore, the porous amorphous silicon particles are less likely to be broken due to the dislocation defect, and a conductive path in the particles is less likely to disappear. Therefore, charge-discharge cycle characteristics and storage characteristics of the all-solid-state battery 10 and the non-aqueous electrolyte lithium-ion secondary battery 20 are improved. In addition, since the negative electrode mixture layers 13 and 23 contain the conductive additive, the negative electrode mixture layers 13 and 23 have high electrical conductivity. Therefore, in the all-solid-state battery 10 and the non-aqueous electrolyte lithium-ion secondary battery 20 according to the present embodiment, since lithium is easily inserted into the porous amorphous silicon particles even when thicknesses of the negative electrode mixture layers 13 and 23 are increased, an electric capacity is increased.

In the all-solid-state battery 10 and the non-aqueous electrolyte lithium-ion secondary battery 20 according to the present embodiment, when the porous amorphous silicon particles contained in the negative electrode mixture layers 13 and 23 include the lamellar protrusions, the interval between the lamellar protrusions adjacent to each other is in the range of 1 nm or more and 100 nm or less and the average thickness of the lamellar protrusions is in the range of 1 nm or more and 50 nm or less, and thus the volume expansion during charging can be efficiently absorbed by the pore, which is the interval between the lamellar protrusions. Therefore, the porous amorphous silicon particles have a smaller volume change in appearance due to charge and discharge. Therefore, the charge-discharge cycle characteristics and the storage characteristics of the all-solid-state battery 10 and the non-aqueous electrolyte lithium-ion secondary battery 20 are further improved.

In the all-solid-state battery 10 and the non-aqueous electrolyte lithium-ion secondary battery 20 according to the present embodiment, when the porous amorphous silicon particles contained in the negative electrode mixture layers 13 and 23 include the columnar protrusions, the interval between the columnar protrusions adjacent to each other is in the range of 1 nm or more and 100 nm or less and the average diameter of the columnar protrusions is in the range of 1 nm or more and 50 nm or less, and thus the volume expansion during charging can be efficiently absorbed by the pore, which is the interval between the columnar protrusions. Therefore, the porous amorphous silicon particles have a smaller volume change in appearance due to charge and discharge. Therefore, the charge-discharge cycle characteristics and the storage characteristics of the all-solid-state battery 10 and the non-aqueous electrolyte lithium-ion secondary battery 20 are further improved.

In the all-solid-state battery 10 and the non-aqueous electrolyte lithium-ion secondary battery 20 according to the present embodiment, when the average porosity of the porous amorphous silicon particles contained in the negative electrode mixture layers 13 and 23 is in the range of 10% or more and 99% or less, the volume expansion during charging can be efficiently absorbed by the pore. Therefore, the porous amorphous silicon particles have a smaller volume change in appearance due to charge and discharge. Therefore, the charge-discharge cycle characteristics and the storage characteristics of the all-solid-state battery 10 and the non-aqueous electrolyte lithium-ion secondary battery 20 are further improved.

In the all-solid-state battery 10 and the non-aqueous electrolyte lithium-ion secondary battery 20 according to the present embodiment, when the conductive additives contained in the negative electrode mixture layers 13 and 23 contain the carbon material, since the carbon material is excellent in conductivity, the conductivity of the negative electrode mixture layers 13 and 23 is improved. Therefore, since the lithium ions are easily inserted into the porous amorphous silicon particles, the electric capacity of the all-solid-state battery 10 and the non-aqueous electrolyte lithium-ion secondary battery 20 is improved.

In the all-solid-state battery 10 according to the present embodiment, when the negative electrode mixture layer 13 further contains the solid electrolyte, the lithium-ion conductivity of the negative electrode mixture layer 13 is improved. In addition, the affinity between the negative electrode mixture layer 13 and the solid electrolyte layer 14 is increased. Therefore, since the all-solid-state battery 10 has high lithium-ion conductivity, the charge-discharge cycle characteristics at a high current density are improved.

The preferred embodiment of the invention has been described in detail above, but the invention is not limited to the specific embodiment, and various modifications and changes can be made within the scope of the gist of the invention described in the claims.

### [Example 1]

### (1) Production of Porous Amorphous Silicon Particles

Silicon (bulk shape, purity: 99.9% or more) and aluminum (pellet shape, purity: 99.999%) were mixed at a proportion of Si:Al = 12:88 (at.%) . The obtained mixture was arc-melted in a vacuum furnace in a state of being replaced with argon gas to produce an Al-Si master alloy. The produced Al-Si master alloy was heated, and the obtained molten metal at 1400°C was crushed and miniaturized by a high-speed jet flow of 10 MPa of argon gas by using a gas atomizing device, and then solidified to produce an Al-Si alloy powder having a particle diameter of 63 um or less. The Al-Si alloy powder is a eutectic alloy containing Al and Si. The Al-Si alloy powder was immersed in an aqueous hydrochloric acid solution having a concentration of 2 normal and a temperature of 50°C for 12 hours to elute Al in the Al-Si alloy powder to produce silicon particles.

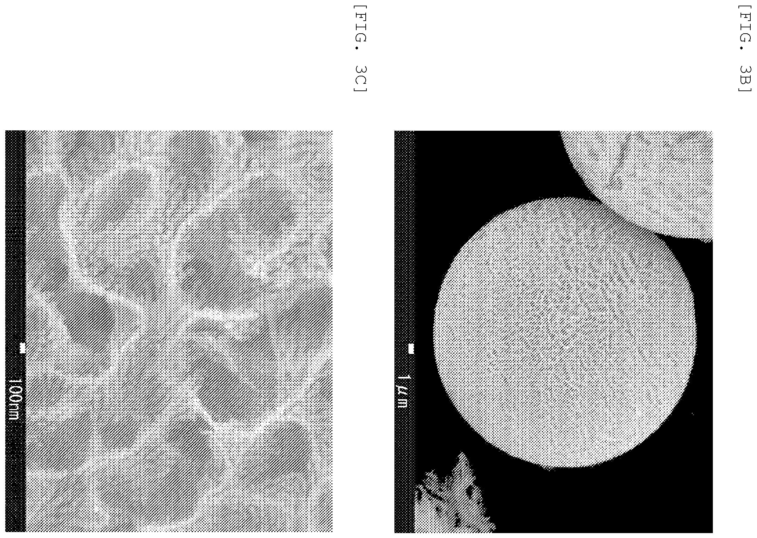

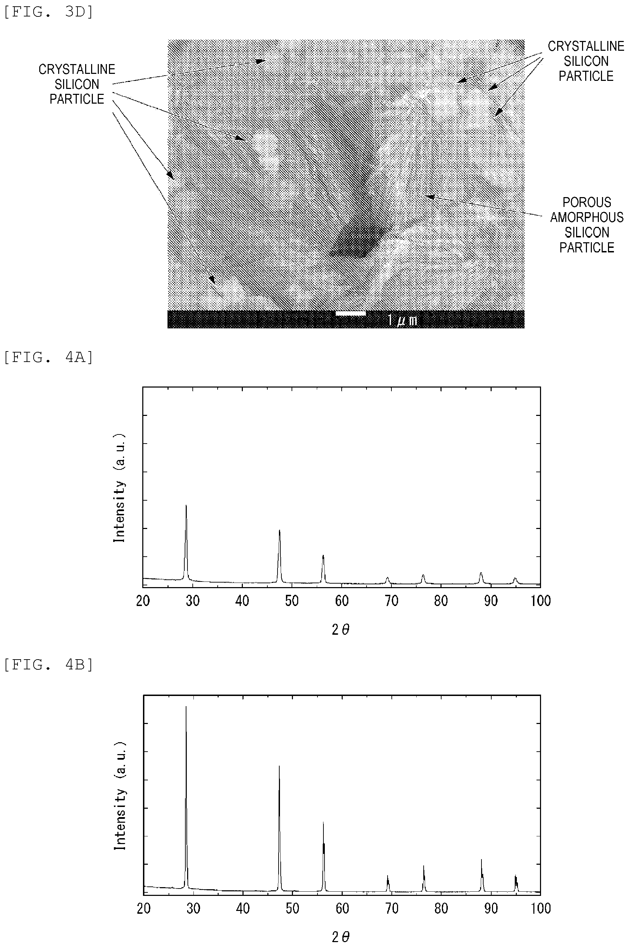

The obtained silicon particles were observed by using a scanning electron microscope with an electron-beam backscattering diffractometer (SEM-EBSD). An obtained SEM photograph is illustrated in FIG. 3. As illustrated in FIG. 3A and FIG. 3B, it was confirmed that the silicon particles had a spherical shape. An average particle diameter of these silicon particles was 50 um. In addition, it was confirmed that amorphous silicon particles are porous and had a co-continuous structure including a plurality of lamellar protrusions and a plurality of columnar protrusions (see FIG. 3C). As a result of confirming the lamellar protrusions and the columnar protrusions by the EBSD, Kikuchi lines were not found. Therefore, it was confirmed that the silicon particles were porous amorphous silicon particles. Further, it was confirmed that the silicon particles contained fine crystalline silicon particles (see FIG. 3D). The crystalline silicon particles were particles having facet surfaces, and as a result of confirming by the EBSD, Kikuchi lines were found. An average particle diameter of the crystalline silicon particles was 1.0 um, and there was a tendency that the crystalline silicon particles were present in a surface layer of the porous amorphous silicon particles. A content of the crystalline silicon particles in the silicon particles was 10% or less.

It was confirmed that the lamellar protrusions of the porous amorphous particles had an average thickness of 100 nm, an interval between the lamellar protrusions adjacent to each other was 1 nm or more and 100 nm or less, the columnar protrusions had an average diameter of 100 nm, and an interval between the columnar protrusions adjacent to each other was 1 nm or more and 100 nm or less (see FIG. 3C). In addition, the columnar protrusions illustrated in FIG. 3C had an average length of 1 um and an average aspect ratio (average length / average diameter) of 10.

An XRD spectrum of the obtained silicon particles was measured by X-ray diffraction (XRD) using Cu-Kα rays. A result thereof is illustrated in FIG. 4(a). In addition, as a reference example, FIG. 4(b) illustrates an XRD spectrum of a reference sample of crystalline silicon (silicon particles manufactured by Kojundo Chemical Laboratory Co., Ltd., average particle diameter: 5 um, purity: 3N). Measurement conditions of the XRD spectra in FIGS. 4(a) and 4(b) are the same.

It can be seen that a diffraction peak of the XRD spectrum due to crystalline silicon in FIG. 4(a) had a lower peak intensity than a diffraction peak of the XRD spectrum in FIG. 4(b), and a half-value width of the peak was further widened. Therefore, it was confirmed that the obtained silicon particles contained a small amount of crystal phase and mostly contained an amorphous phase. A ratio A/B of a maximum peak value A of the XRD spectrum due to crystalline silicon in FIG. 4(a) to a maximum peak value B of the XRD spectrum in FIG. 4(b) was 0.43. In addition, a ratio C/D of a half-value width C of the maximum peak value of the XRD spectrum due to crystalline silicon in FIG. 4(a) to a half-value width D of the maximum peak value of the XRD spectrum in FIG. 4(b) was 2.44.

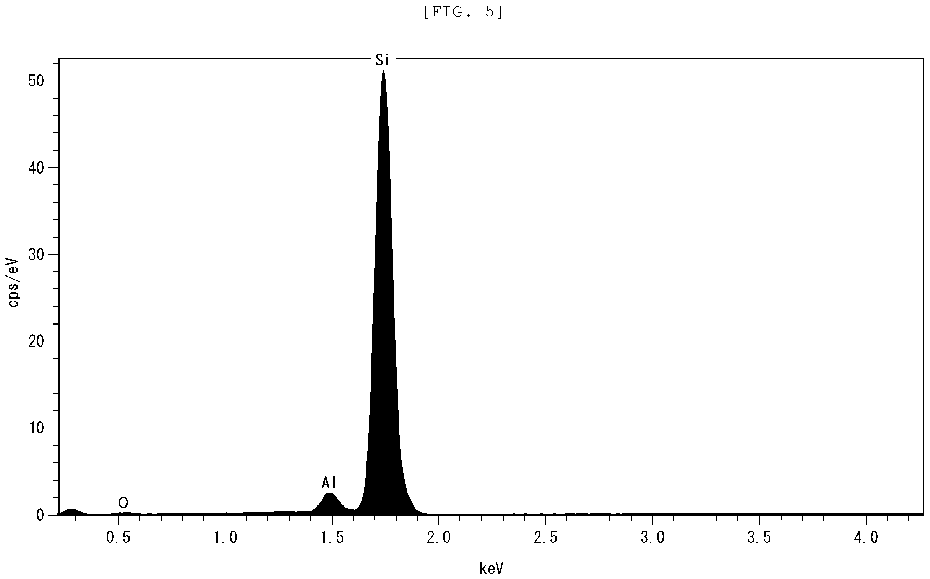

The obtained silicon particles were subjected to composition analysis by using a scanning electron microscope with an energy dispersive X-ray analyzer (SEM-EDX). An energy spectrum measured by the EDX is illustrated in FIG. 5. In addition, from the energy spectrum in FIG. 5, a composition of the silicon particles was calculated by mass percent (mass%) and atomic percent (at.%). A result thereof is illustrated in Table 1. From the composition illustrated in Table 1, it was confirmed that the silicon particles contained 93 at.% (94 mass% or more) or more of a silicon element. In addition, it was confirmed that 3.33 at.% of aluminum remained in the silicon particles. Further, the silicon particles contained approximately 4 at.% of oxygen. This oxygen is considered to be present on a surface of silicon.

**[Table 1]**

| | Mass% | at.% |
|---|---|---|
| Silicon | 94.64 | 93.04 |
| Aluminum | 3.26 | 3.33 |
| Oxygen | 2.10 | 3.62 |

### (2) Production of Solid Electrolyte Particles

Li₂S (manufactured by Sigma-Aldrich) and P₂S₅ (manufactured by Sigma-Aldrich) were mixed by using a ball mill at a molar ratio of 75:25. The obtained mixture was vacuum dried in a glove box at room temperature to produce Li₂S-P₂S₅ solid electrolyte particles.

### (3) Production of Negative Electrode Mixture Pellet

The porous amorphous silicon particles obtained in the above (1), the Li₂S-P₂S₅ solid electrolyte particles obtained in the above (2), and a conductive additive were put into a ball mill at a mass ratio of 1:1:5. Next, ball milling was performed by using an alumina ball (diameter: 3 mm) to obtain a negative electrode mixture. As the conductive additive, carbon black (Super-P, manufactured by MTI) was used. The obtained negative electrode mixture was put into a mold and pressure-molded under conditions of a molding load of 20 kN and a pressing time of 3 minutes to produce a disk-shaped negative electrode mixture pellet having a diameter of 10 mm and a thickness of 12 um.

### (4) Production of Solid Electrolyte Pellet

The Li₂S-P₂S₅ solid electrolyte particles obtained in the above (2) were put into a mold and pressure-molded under conditions of a molding load of 20 kN and a pressing time of 3 minutes to produce a disk-shaped solid electrolyte pellet having a diameter of 10 mm and a thickness of 0.6 mm.

### (5) Production of All-Solid-State Battery

The negative electrode mixture pellet obtained in the above (3) and the solid electrolyte pellet obtained in the above (4) were laminated in this order on a stainless steel collector plate. Next, an In foil (thickness: 100 um), a Li foil (thickness: 100 µm), and a stainless steel collector plate were laminated in this order on the solid electrolyte pellet. Then, by pressurizing under a condition of 100 MPa, an all-solid-state battery in which the stainless steel collector plate, the negative electrode mixture pellet, the solid electrolyte pellet, the In foil, the Li foil, and the stainless steel collector plate were laminated in this order was produced. The In foil is used to bond the solid electrolyte pellet and the Li foil.

### (6) Evaluation of All-Solid-State Battery

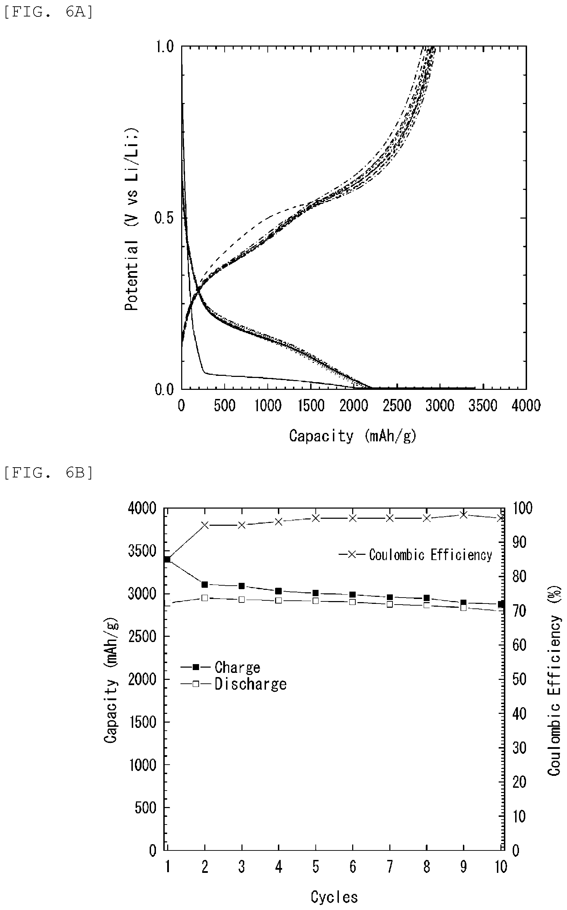

A charge-discharge cycle test in which a charge-discharge cycle of charging the porous amorphous silicon particles in a negative electrode mixture layer to -0.615 V at a charge rate of 0.05 C (1 C is 3579 mA/g: a value when the composition of the porous amorphous silicon particles in a fully charged state was Li₁₅Si₄) and discharging the porous amorphous silicon particles to 0.38 V at a discharge rate of 0.05 C was defined as one cycle was performed on the all-solid-state battery obtained in the above (5) for 10 cycles. The charge-discharge cycle test was performed in an environment at a temperature of 25°C. A result thereof is illustrated in FIGS. 6A and 6B. In a graph of FIG. 6A, a horizontal axis represents a capacity, and a vertical axis represents a potential. In addition, in a graph of FIG. 6B, a horizontal axis represents the number of cycles, and a vertical axis represents a mass capacity density (capacity) and charge-discharge efficiency (Coulombic Efficiency) of the porous amorphous silicon particles during charging and discharging.

As illustrated in the graphs of FIGS. 6A and 6B, the all-solid-state battery obtained in Example 1 has a mass capacity density of 3398 mAh/g during discharging in the first cycle, which is a high value of 95% with respect to a theoretical mass capacity density (3579 mAh/g) of silicon. In addition, comparing the mass discharge capacity at the 10th cycle (2876 mAh/g) and the mass discharge capacity at the first cycle, it can be seen that a capacity retention ratio at the 10th cycle was 85%, a decrease in a discharge capacity due to the charge-discharge cycle was small, and charge-discharge cycle characteristics were excellent.

### [Example 2]

### (1) Production of Porous Amorphous Silicon Ribbon

First, silicon (bulk shape, purity: 99.999% or more) and aluminum (pellet shape, purity: 99.999%) were mixed at a proportion of Si:Al = 12:88 (at.%), and the obtained mixture was arc-melted in a vacuum furnace in a state of being replaced with argon gas to obtain a molten metal. The molten metal was quenched by single-roll liquid quenching by using a single-roll casting machine to produce a ribbon-shaped Al-Si alloy having a thickness of about 20 um. The Al-Si alloy is a eutectic alloy containing Al and Si. The Al-Si alloy was immersed in an aqueous hydrochloric acid solution having a concentration of 5 normal and a temperature of 60°C for 24 hours to elute Al to produce ribbon-shaped silicon.

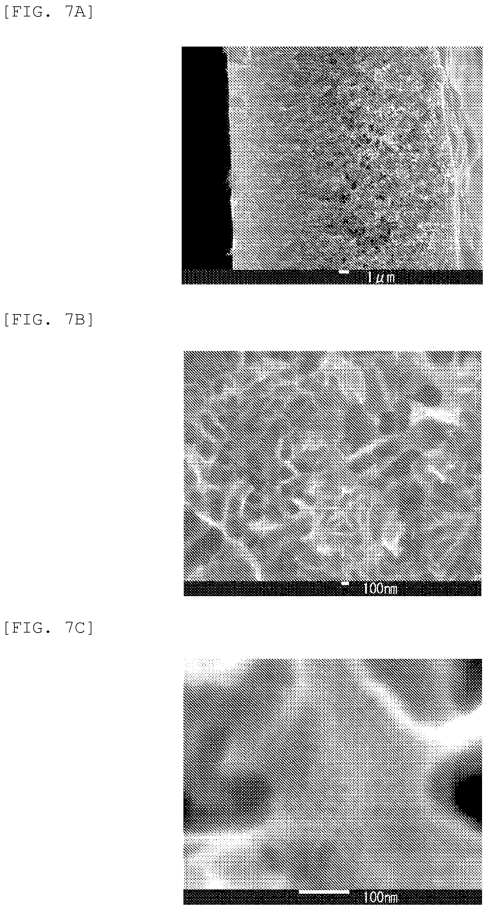

A scanning electron microscope (SEM) photograph of the obtained ribbon-shaped silicon is illustrated in FIGS. 7A, 7B, and 7C. As illustrated in FIGS. 7A to 7C, it was confirmed that the obtained ribbon-shaped silicon was porous and had a lamellar structure including a plurality of lamellar protrusions therein (see FIGS. 7A and 7B). It was confirmed that the lamellar protrusions had an average thickness of 20 nm and an interval between the lamellar protrusions adjacent to each other was 1 nm or more and 20 nm or less (see FIG. 7C).

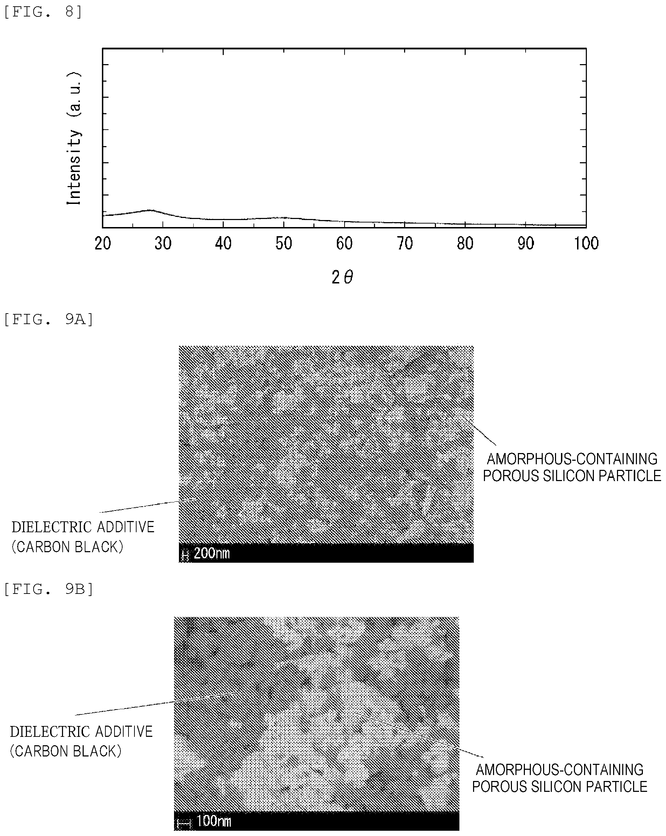

A measurement result of the obtained ribbon-shaped silicon measured by X-ray diffraction (XRD) is illustrated in FIG. 8. As illustrated in FIG. 8, since an XRD spectrum did not have a sharp peak and had a gentle shape, it was confirmed that the obtained ribbon-shaped silicon did not contain crystalline silicon and was a single substance containing only an amorphous silicon phase. From the above result, it was confirmed that the ribbon-shaped silicon obtained in Example 2 was porous amorphous silicon having a lamellar structure.

### [Example 3]

### (1) Production of Porous Amorphous Silicon Ribbon

A ribbon-shaped silicon was produced in the same manner as in (1) of Example 2 except that Si:Al was 20:80 (at. %) .

The obtained ribbon-shaped silicon was subjected to surface observation by SEM and XRD pattern measurement. As a result of the surface observation by SEM, it was confirmed that the obtained ribbon-shaped silicon was porous and had a lamellar structure in which an average thickness of lamellar protrusions was 20 nm and an interval between the lamellar protrusions adjacent to each other was 1 nm or more and 20 nm or less. In addition, from the XRD pattern, it was confirmed that the obtained ribbon-shaped silicon was a single substance containing only an amorphous silicon phase. From the above result, it was confirmed that the ribbon-shaped silicon obtained in Example 3 was porous amorphous silicon having a lamellar structure.

### (2) Production of Non-Aqueous Electrolyte Lithium-Ion Secondary Battery

A non-aqueous electrolyte lithium-ion secondary battery using the amorphous phase containing porous silicon ribbon obtained in the above (1) as a negative electrode material was produced. First, the amorphous phase containing porous silicon ribbon, a conductive additive, and a polyimide binder were put into a ball mill at a mass ratio of 60:25:15. Next, ball milling was performed by using an alumina ball (diameter: 3 mm) to obtain a negative electrode mixture. As the conductive additive, carbon black (Super-P, manufactured by MTI) was used. The obtained negative electrode mixture was dispersed in N-methyl-2-pyrrolidone to prepare a homogeneous negative electrode mixture slurry. The obtained negative electrode mixture slurry was applied onto a rolled copper foil so as to be 1.5 mg/cm², and then heated to 450°C in a vacuum and dried to obtain a copper foil with a negative electrode mixture layer. Solidification was performed. A separator and a pure lithium foil were laminated on the negative electrode mixture layer of the copper foil with the negative electrode mixture layer, and a non-aqueous electrolyte was injected into the obtained laminate to produce a coin-type half battery having a size of 2023. As the non-aqueous electrolyte, a non-aqueous electrolyte solution in which lithium hexafluorophosphate was dissolved in fluoroethylene carbonate at a concentration of 1 mol/liter was used.

### (3) Observation of Negative Electrode

A scanning electron microscope (SEM) photograph of the obtained negative electrode is illustrated in FIGS. 9A and 9B. FIG. 9A illustrates a low-magnification SEM image, and it was confirmed from the SEM image that porous amorphous silicon particles observed in white and a conductive additive (carbon black) observed in gray were uniformly mixed. In addition, FIG. 9B illustrates a high-magnification SEM image, and it was confirmed from the SEM image that the lamellar structure of the porous amorphous silicon particles was maintained even after the negative electrode mixture layer was formed.

### (4) Evaluation of Non-Aqueous Electrolyte Lithium-Ion Secondary Battery

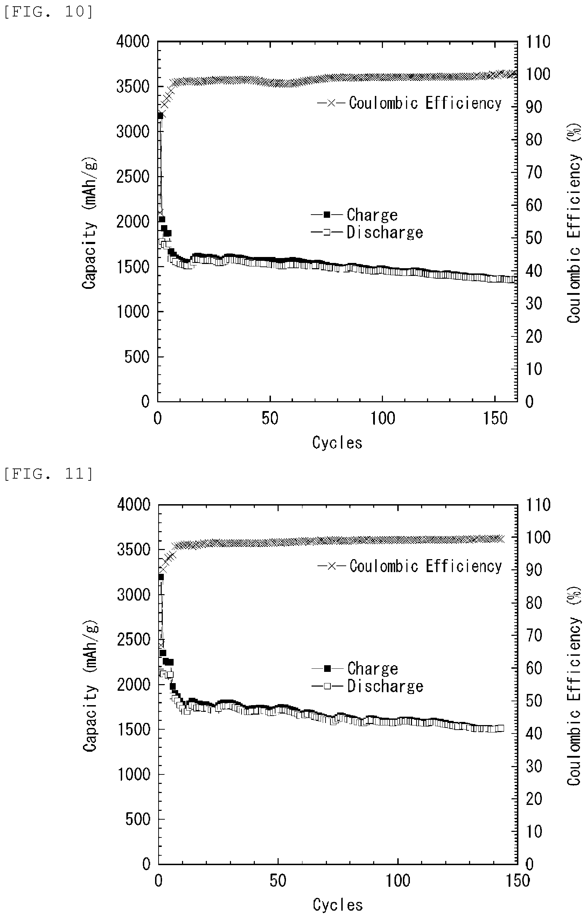

A charge-discharge cycle test in which a charge-discharge cycle of charging the porous amorphous silicon particles in the negative electrode mixture layer to 0.005 V at a charge rate of 0.5 C (1 C is 3579 mA/g) and discharging the porous amorphous silicon particles to 1 V at a discharge rate of 0.5 C was defined as one cycle was performed on the non-aqueous electrolyte lithium-ion secondary battery obtained in the above (2) for 160 cycles. A measurement result thereof is illustrated in a graph of FIG. 10. In the graph of FIG. 10, a horizontal axis represents the number of cycles, and a vertical axis represents a mass capacity density and charge-discharge efficiency of the porous amorphous silicon particles during charging and discharging. As illustrated in the graph of FIG. 10, the mass capacity density during discharging was 1571 mAh/g at the 20th cycle at which charge or discharge was stabilized. In addition, comparing the mass discharge capacity at the 160th cycle (1353 mAh/g) and the mass discharge capacity at the 20th cycle, it can be seen that a capacity retention ratio at the 160th cycle was 86%, a decrease in a discharge capacity due to the charge-discharge cycle was small, and charge-discharge cycle characteristics were excellent.

### [Example 4]

### (1) Production of Porous Amorphous Silicon Particles

Silicon (bulk shape, purity: 99.9% or more) and aluminum (pellet shape, purity: 99.999%) were mixed at a proportion of Si:Al = 80:20 (at.%), and the obtained mixture was arc-melted in a vacuum furnace in a state of being replaced with argon gas to obtain an Al-Si master alloy. The produced Al-Si master alloy was heated, and the obtained molten metal at 1400°C was crushed and miniaturized by a high-speed jet flow of 10 MPa of helium gas by using a gas atomizing device to obtain an Al-Si alloy powder having a particle diameter of about 10 um. The Al-Si alloy powder is a hypereutectic alloy containing Al and Si. The obtained Al-Si alloy powder was immersed in hydrochloric acid having a concentration of 5 normal and a temperature of 60°C for 24 hours to elute Al to produce silicon particles.

The obtained silicon particles were observed by using an SEM-EBSD. As a result of shape observation by the SEM and crystal confirmation by the EBSD, it was confirmed that the obtained silicon particles were a mixture containing spherical amorphous silicon particles having a relatively large particle diameter and crystalline silicon particles appearing on a surface layer of the amorphous silicon particles. An average particle diameter of the amorphous silicon particles was 50 um. An average particle diameter of the crystalline silicon particles was 1.0 um, and a content of the crystalline silicon particles in the silicon particles was 10% or less. In addition, it was confirmed that the amorphous silicon particles were porous and had a co-continuous structure including a plurality of lamellar protrusions and a plurality of columnar protrusions. The lamellar protrusions had an average thickness of 100 nm, and an interval between the lamellar protrusions adjacent to each other was 1 nm or more and 100 nm or less. In addition, the columnar protrusions had an average length of 1.0 um and an average aspect ratio of 10, and an interval between the columnar protrusions adjacent to each other was 1 nm or more and 100 nm or less.

An XRD spectrum of the obtained silicon particles was measured by XRD using Cu-Ka rays. A ratio A/B of a maximum peak value A of the XRD spectrum of the obtained silicon particles due to crystalline silicon to a maximum peak value B of the XRD spectrum of a reference sample of crystalline silicon was 0.5 or less. In addition, a ratio C/D of a half-value width C of the maximum peak value of the XRD spectrum of the porous amorphous silicon particles due to crystalline silicon to a half-value width D of the maximum peak value of the XRD spectrum of the reference sample of the crystalline silicon was 2.0 or more.

### (2) Production of Non-Aqueous Electrolyte Lithium-Ion Secondary Battery

A coin-type half battery having a size of 2023 was produced in the same manner as in (2) of Example 3 except that the porous amorphous silicon particle obtained in the above (1) was used as a negative electrode material.

### (3) Evaluation of Non-Aqueous Electrolyte lithium-ion Secondary Battery

The lithium-ion battery obtained in the above (2) was subjected to a charge-discharge cycle test for 143 cycles in the same manner as in (4) of Example 3. A measurement result thereof was illustrated in a graph of FIG. 11. In the graph of FIG. 11, a horizontal axis represents the number of cycles, and a vertical axis represents a mass capacity density and charge-discharge efficiency of the porous amorphous silicon particles during charging and discharging. As illustrated in the graph of FIG. 11, the mass capacity density during discharging was 1770 mAh/g at the 10th cycle at which charge or discharge was stabilized. In addition, comparing the mass discharge capacity at the 143rd cycle (1506 mAh/g) and the mass discharge capacity at the 10th cycle, it can be seen that a capacity retention ratio at the 143rd cycle was 85%, a decrease in a discharge capacity due to the charge-discharge cycle was small, and charge-discharge cycle characteristics were excellent.

### [Example 5]

### (1) Production of Porous Amorphous Silicon Particles

Silicon particles were produced in the same manner as in (1) of Example 4 except that Si:Al was 70:30 (at.%).

The obtained silicon particles were observed by using an SEM-EBSD. As a result of shape observation by the SEM and crystal confirmation by the EBSD, it was confirmed that the obtained silicon particles were a mixture containing spherical amorphous silicon particles having a relatively large particle diameter and crystalline silicon particles appearing on surfaces of the amorphous silicon particles. An average particle diameter of the amorphous silicon particles was 50 um. An average particle diameter of the crystalline silicon particles was 1.0 um, and a content of the crystalline silicon particles in the silicon particles was 10% or less. It was confirmed that the amorphous silicon particles were porous and had a co-continuous structure including a plurality of lamellar protrusions and a plurality of columnar protrusions. The lamellar protrusions had an average thickness of 100 nm, and an interval between the lamellar protrusions adjacent to each other was 1 nm or more and 100 nm or less. In addition, the columnar protrusions had an average length of 1.0 um and an average aspect ratio of 10, and an interval between the columnar protrusions adjacent to each other was 1 nm or more and 100 nm or less. Further, it was confirmed from an XRD pattern that the obtained silicon particles were porous amorphous silicon particles.

An XRD spectrum of the obtained silicon particles was measured by XRD using Cu-Ka rays. A ratio A/B of a maximum peak value A of the XRD spectrum of the obtained silicon particles due to crystalline silicon to a maximum peak value B of the XRD spectrum of a reference sample of crystalline silicon was 0.5 or less. In addition, a ratio C/D of a half-value width C of the maximum peak value of the XRD spectrum of the porous amorphous silicon particles due to crystalline silicon to a half-value width D of the maximum peak value of the XRD spectrum of the reference sample of the crystalline silicon was 2.0 or more.

### (2) Production of Non-Aqueous Electrolyte Lithium-Ion Secondary Battery

A coin-type half battery having a size of 2023 was produced in the same manner as in (2) of Example 3 except that the porous amorphous silicon particle obtained in the above (1) was used as a negative electrode material.

### (3) Evaluation of Non-Aqueous Electrolyte lithium-ion Secondary Battery

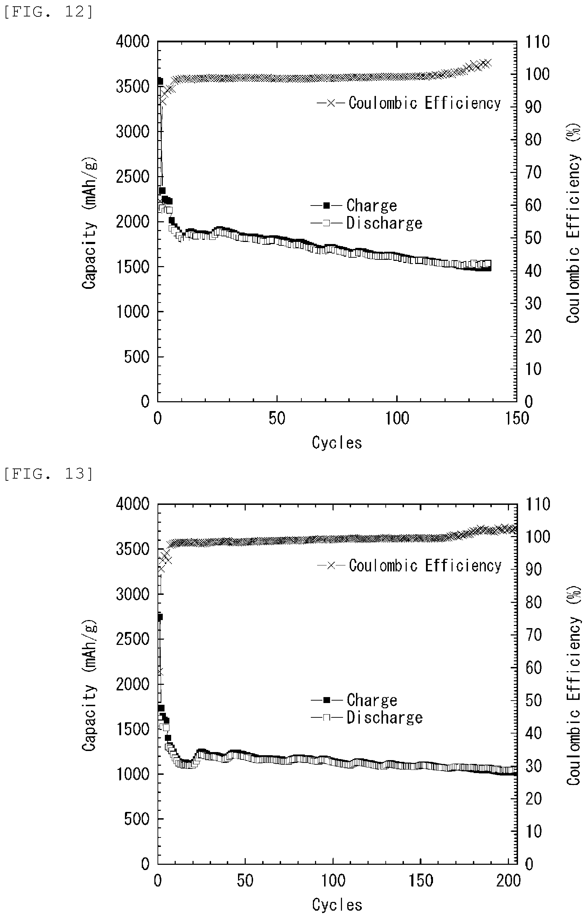

The lithium-ion battery obtained in the above (2) was subjected to a charge-discharge cycle test for 143 cycles in the same manner as in (4) of Example 3. A measurement result thereof was illustrated in a graph of FIG. 12. In the graph of FIG. 12, a horizontal axis represents the number of cycles, and a vertical axis represents a mass capacity density and charge-discharge efficiency of the porous amorphous silicon particles during charging and discharging. As illustrated in the graph of FIG. 12, the mass capacity density during discharging was 1811 mAh/g at the 10th cycle at which charge or discharge was stabilized. In addition, comparing the mass discharge capacity at the 138th cycle (1536 mAh/g) and the mass discharge capacity at the 10th cycle, it can be seen that a capacity retention ratio at the 138th cycle was 85%, a decrease in a discharge capacity due to the charge-discharge cycle was small, and charge-discharge cycle characteristics were excellent.

### [Example 6]

### (1) Production of Porous Amorphous Silicon Particles

Silicon (bulk shape, purity: 99.9% or more), aluminum (pellet shape, purity: 99.999%), and titanium (granular shape, purity: 99.999%) were mixed at a proportion of Si:Al:Ti = 19.5:79.5:1.0 (at.%), and the obtained mixture was arc-melted in a vacuum furnace in a state of being replaced with argon gas to obtain an Al-Ti-Si master alloy. The produced Al-Ti-Si master alloy was heated, the obtained molten metal at 1400°C was crushed and miniaturized by a high-speed jet flow of 10 MPa of helium gas by using a gas atomizing device, and then condensed to obtain an Al-Si-Ti alloy powder having a particle diameter of about 10 um or less. The Al-Si-Ti alloy powder is an alloy in which Ti is added to a hypereutectic alloy of Al and Si. This Al-Si-Ti alloy powder was immersed in hydrochloric acid having a concentration of 5 normal and a temperature of 60°C for 24 hours to elute Al and Ti to produce silicon particles.

The obtained silicon particles were observed by using an SEM-EBSD. As a result of shape observation by the SEM and crystal confirmation by the EBSD, it was confirmed that the obtained silicon particles were a mixture containing spherical amorphous silicon particles having a relatively large particle diameter and crystalline silicon particles adhering to surfaces of the amorphous silicon particles. An average particle diameter of the amorphous silicon particles was 50 um. An average particle diameter of the crystalline silicon particles was 1.0 um, and a content of the crystalline silicon particles in the silicon particles was 10% or less. In addition, it was confirmed that the amorphous silicon particles were porous and had a co-continuous structure including a plurality of lamellar protrusions and a plurality of columnar protrusions. The lamellar protrusions had an average thickness of 100 nm, and an interval between the lamellar protrusions adjacent to each other was 1 nm or more and 100 nm or less. In addition, the columnar protrusions had an average length of 1 um and an average aspect ratio of 10, and an interval between the columnar protrusions adjacent to each other was 1 nm or more and 100 nm or less.

An XRD spectrum of the obtained silicon particles was measured by XRD using Cu-Ka rays. A ratio A/B of a maximum peak value A of the XRD spectrum of the obtained silicon particles due to crystalline silicon to a maximum peak value B of the XRD spectrum of a reference sample of crystalline silicon was 0.5 or less. In addition, a ratio C/D of a half-value width C of the maximum peak value of the XRD spectrum of the porous amorphous silicon particles due to crystalline silicon to a half-value width D of the maximum peak value of the XRD spectrum of the reference sample of the crystalline silicon was 2.0 or more.

### (2) Production of Non-Aqueous Electrolyte Lithium-Ion Battery

A coin-type half battery having a size of 2023 was produced in the same manner as in (2) of Example 3 except that the porous amorphous silicon particle obtained in the above (1) was used as a negative electrode material.

### (3) Evaluation of Non-Aqueous Electrolyte lithium-ion Battery

The lithium-ion battery obtained in the above (2) was subjected to a charge-discharge cycle test for 205 cycles in the same manner as in (4) of Example 3. A measurement result thereof was illustrated in a graph of FIG. 13. In the graph of FIG. 13, a horizontal axis represents the number of cycles, and a vertical axis represents a mass capacity density and charge-discharge efficiency of the porous amorphous silicon particles during charging and discharging. As illustrated in the graph of FIG. 11, the mass capacity density during discharging was 1097 mAh/g at the 20th cycle at which charge or discharge was stabilized. In addition, comparing the mass discharge capacity at the 205th cycle (1040 mAh/g) with the mass discharge capacity at the 20th cycle, it can be seen that a capacity retention ratio at the 205th cycle was 95%, a decrease in a discharge capacity due to the charge-discharge cycle is extremely small, and charge-discharge cycle characteristics were very excellent.

### Reference Sign List

- 10:: all-solid-state battery
- 11:: negative electrode
- 12:: negative electrode current collector
- 13:: negative electrode mixture layer
- 14:: solid electrolyte layer
- 15:: positive electrode
- 16:: positive electrode mixture layer
- 17:: positive electrode current collector
- 20:: non-aqueous electrolyte lithium-ion secondary battery
- 21:: negative electrode
- 22:: negative electrode current collector
- 23:: negative electrode mixture layer
- 24:: separator
- 25:: positive electrode
- 26:: positive electrode mixture layer
- 27:: positive electrode current collector

## Claims

1. A lithium-ion secondary battery negative electrode mixture comprising: a conductive additive and a negative electrode active material, wherein
the negative electrode active material contains porous amorphous silicon particles including an amorphous silicon phase, and
the porous amorphous silicon particles have a lamellar structure including lamellar protrusions having an average thickness in a range of 1 nm or more and 200 nm or less, a columnar structure including columnar protrusions having an average diameter in a range of 1 nm or more and 100 nm or less, or a co-continuous structure including the lamellar protrusions and the columnar protrusions.

2. The lithium-ion secondary battery negative electrode mixture according to claim 1, wherein
the porous amorphous silicon particles include the lamellar protrusions, and an interval between the lamellar protrusions adjacent to each other is in a range of 1 nm or more and 100 nm or less.

3. The lithium-ion secondary battery negative electrode mixture according to claim 1 or 2, wherein
the porous amorphous silicon particles have the lamellar protrusions, and the average thickness of the lamellar protrusions is in a range of 1 nm or more and 50 nm or less.

4. The lithium-ion secondary battery negative electrode mixture according to claim 1 or 2, wherein
the porous amorphous silicon particle include the columnar protrusions, and an interval between the columnar protrusions adjacent to each other is in a range of 1 nm or more and 100 nm or less.

5. The lithium-ion secondary battery negative electrode mixture according to claim 1 or 2, wherein
the porous amorphous silicon particles have the columnar protrusions, and the average diameter of the columnar protrusions is in a range of 1 nm or more and 50 nm or less.

6. The lithium-ion secondary battery negative electrode mixture according to any one of claims 1 to 5, wherein
the porous amorphous silicon particles have an average porosity in a range of 10% or more and 99% or less.

7. The lithium-ion secondary battery negative electrode mixture according to any one of claims 1 to 6, wherein
the conductive additive contains a carbon material.

8. The lithium-ion secondary battery negative electrode mixture according to any one of claims 1 to 7, further comprising:
a solid electrolyte.

9. A lithium-ion secondary battery comprising a negative electrode including the lithium-ion secondary battery negative electrode mixture according to any one of claims 1 to 8.
